Europäisches Patentamt

European Patent Office

Office européen des brevets

(11) Veröffentlichungsnummer: **0 381 305**
**A1**

## (12) EUROPÄISCHE PATENTANMELDUNG

(21) Anmeldenummer: 90250029.7

(22) Anmeldetag: 02.02.90

(51) Int. Cl.⁵: **C02F 3/06, C02F 3/32,**
**B01D 21/00**

(30) Priorität: 02.02.89 DE 3903409

(43) Veröffentlichungstag der Anmeldung:
08.08.90 Patentblatt 90/32

(84) Benannte Vertragsstaaten:
**AT BE CH DE DK FR IT LI LU NL SE**

(71) Anmelder: **MANNESMANN Aktiengesellschaft**
**Mannesmannufer 2**
**D-4000 Düsseldorf 1(DE)**

(72) Erfinder: **Ripl, Wilhelm, Prof. Dr.-Phil.**
**Kleinaustrasse 11**
**D-1000 Berlin 37(DE)**

(74) Vertreter: **Pfenning, Meinig & Partner**
**Kurfürstendamm 170**
**D-1000 Berlin 15(DE)**

(54) Verfahren und Vorrichtung zum Abscheiden von Schmutz- und Schadstoffen aus Abwässern.

(57) Es wird ein Verfahren zum Abscheiden von Schmutz-und Schadstoffen aus Abwässern, die in Becken oder Behälter (100) eingeleitet werden, vorgeschlagen. In die Becken oder Behälter werden Einbauelemente (101) eingesetzt, die als Bürsten, Stäbe, Netze, Bänder oder dergleichen ausgebildet sein können und die mit einem Biofilm versehen sind. An den Einbauelementen setzen sich einerseits Stoffe ab, die den Aufwuchs des Biofilms begünstigen und andererseits wird die Strömung derart verändert, daß die Sedimentation von sedimentierbaren Stoffen verbessert wird. In vorgegebenen zeitlichen Abständen wird der Biofilmzuwachs mittels Abstreifoder Abschabvorrichtungen mechanisch derart entfernt, daß ein Rest der Biomasse auf den Einbauelementen verbleibt, so daß sich dort erneut Aufwuchsorganismen bilden können.

Fig. 1

Xerox Copy Centre

## Verfahren und Vorrichtung zum Abscheiden von Schmutz- und Schadstoffen aus Abwässern

Die Erfindung betrifft ein Verfahren und eine Vorrichtung zum Abscheiden von Schmutz- und Schadstoffen aus Abwässern, die in Becken oder Behälter eingeleitet werden.

Regenabläufe von urbanen, oftmals versiegelten Flächen sind durch ihre hohen Schadstoffgehalte, vorrangig Schwermetalle, aber auch verschiedene schwerlösliche organische Residuen, und Nährstoffgehalte ins öffentliche Interesse gerückt worden. Meistens treten Schädigungen der Selbstreinigung in den schwachen Vorflutern für solche Regenabläufe auf. Zur Verbesserung des Reinigungsvorganges werden Regenklärbecken vorgesehen, die die Funktion haben, absetzbare Stoffe durch Sedimentation zurückzuhalten. Solche Klärbecken sind üblicherweise als rechteckige Betonbecken mit einer Tiefe von 1,5 bis 2,5 m ausgebildet.

Der Abscheidegrad solcher Becken ist bei vorgegebener Dimensionierung von der Absetzdauer abhängig. Für die Nährstoffe Phosphor und Stickstoff ist jedoch der erzielte Abscheidungsgrad sehr gering.

Zur Reinigung der Abwässer von organischen Schadstoffen sind verschiedene Verfahren, beispielsweise das Belebtschlammverfahren bekannt. In den organisch gereinigten Abwässern sind aber bestimmte Nährstoffe, wie Phosphor und Stickstoff enthalten, die das Wasser schädigen und entfernt werden müssen. Dazu ist bekannt, daß beispielsweise zu den Belebtschlammanlagen Eisen hinzugegeben wird, wodurch Phosphor entfernt wird. Bei diesem Verfahren verbleibt aber Stickstoff im gereinigten Abwasser, so daß eine getrennte Stickstoffreinigung durchgeführt werden muß.

Der Erfindung liegt somit die Aufgabe zugrunde, ein Verfahren und eine Vorrichtung zum Abscheiden von Schmutz- und Schadstoffen aus Abwässern, beispielsweise aus Regenabläufen, die neben den Trübstoffen auch Schwermetalle und verschiedene schwerlösliche organische Residuen enthalten oder auch aus organisch vorgereinigten Abwässern, die noch überwiegend Phosphor und Stickstoff enthalten, zur Verfügung zu stellen, bei denen die Schmutz- und Schadstoffe mit gutem Wirkungsgrad abgeschieden werden.

Diese Aufgabe wird erfindungsgemäß durch die kennzeichnenden Merkmale des Hauptanspruchs und des nebengeordneten Vorrichtungsanspruchs gelöst.

Dadurch, daß in die Becken oder Behälter Einbauelemente eingesetzt werden, die mit einem Biofilm versehen sind und daß in zeitlichen Abständen jeweils der Biofilmzuwachs mechanisch derart entfernt wird, daß ein Rest auf den Einbauelementen verbleibt, werden einerseits die Strömungsverhältnisse beeinflußt, wodurch aufgrund der unterschiedlichen Turbulenzen sich die sedimentierbaren Stoffe absetzen und andererseits an den Phasengrenzflächen zwischen Einbauteilen und Wasser sich Stoffe absetzen, die von Bakterien bearbeitet werden, wodurch organische Substanzen abgebaut und Nährstoffe freigemacht werden und Aufwuchsorganismen oder sessile Organismen, wie Bakterien, Algen, Ziliaten und Flagellaten erzeugt werden. Durch die Einbauten wird somit der mechanische Vorgang der Sedimentation, ein mechanischer Vorgang des Festsetzens der Stoffe an den Phasengrenzflächen und ein biologischer Vorgang des Aufwuchses hervorgerufen.

Durch die in den Unteransprüchen angegebenen Maßnahmen sind vorteilhafte Weiterbildungen und Verbesserungen möglich. Durch Vorsehen von koppelbaren Einbaumodulen sowohl der Einbauelemente, die in ein Becken eingesetzt werden, als auch der modulartigen Abwassertanks, kann die Leistung der erfindungsgemäßen Vorrichtung schnell und ohne Schwierigkeiten an den gewünschten Bedarf und an die gewünschte Beckengröße angepaßt werden. Weiterhin wird die Auswechselbarkeit und somit die Möglichkeit für die Reinigung und dergleichen verbessert.

Um auch bei stillstehendem Wasserkörper die Aufwuchsbildung zu gewährleisten, können zur Unterstützung der Konvektionsbewegung im Wasser Materialien verwendet werden, die sich in ihrer Wärmekapazität stark vom Waser unterscheiden und dadurch Wasserbewegung induzieren. Eine solche Bewegung kann jedoch auch vorteilhafterweise mit geringem Energieaufwand durch eine Pumpe erzeugt werden. Dadurch können die Stoffübergänge an den Phasengrenzflächen optimal gestaltet und von den Organismen genutzt werden.

Die Einbauelemente oder Einbaumodule können sowohl in unterirdischen als auch in oberirdischen Klärbecken installiert werden, wobei die Belichtung in oberirdischen Becken dazu führt, daß sich ein Biofilm mit vergesellschafteten autotrophen und heterotrophen Organismen bildet, der effizienter für die biologische Retention ist als ein nicht belichteter.

Dadurch, daß die Dichte der Einbauteile oder die Struktur der Einbauteile in Fließrichtung veränderbar gestaltet wird, kann eine Anpassung an die Strömungsbedingungen vorgenommen werden und somit der Abscheidungsgrad weiterhin verbessert werden.

Zur gezielten Entfernung von Phosphor und Stickstoff kann ein Bandreaktor für den Aufwuchs von Algen vorgesehen werden, bei dem ein mit Algen besetztes Endlosband durch das mit Nährstoffen für die Algen versetzte Abwasser geführt werden. Dabei entziehen die Algen und Bakterien die Nährstoffe, nämlich Phosphor und Stickstoff, aus dem Abwasser, wobei durch Abschaben des Algenaufwuchses nach Austritt des Endlosbandes aus dem Abwasser, derart, daß noch ein Film auf dem Band verbleibt, eine Biomasse mit großem Nährwert erzielt wird, die beispielsweise als Dünger für die Bodenverbesserung eingesetzt werden kann. In diesem Ausführungsbeispiel werden Phosphor und Stickstoff in einem Arbeitsgang mit sehr gutem Wirkungsgrad entfernt und es sind keine zusätzlichen Filtrationsprozesse nötig. Der Wirkungsgrad wird weiterhin verbessert, wenn das Endlosband mehrfach umgelenkt und somit mehrfach in das Wasser eingetaucht wird. Dadurch, daß das außerhalb des Abwassers liegende Endlosband beleuchtet wird, wird der Algenaufwuchs gefördert, wobei gleichzeitig das Abwasser zur Vermeidung der Bildung von Planktonalgen im Wasser abgedeckt wird.

Ausführungsbeispiele der Erfindung sind in der Zeichnung dargestellt und werden in der nachfolgenden Beschreibung näher erläutert. Es zeigen:

Fig. 1 die schematische Darstellung eines Regenklärbeckens mit den erfindungsgemäßen Einbauteilen;

Fig. 2 Einbauteile gemäß einem ersten Ausführungsbeispiel der Erfindung;

Fig. 3 Einbauteile gemäß einem zweiten Ausführungsbeispiel der Erfindung; und

Fig. 4 ein weiteres Ausführungsbeispiel der Erfindung, bei dem die Einbauteile als Endlosband ausgebildet sind und das vorzugsweise zum Entfernen von Phosphor und Stickstoff aus organisch vorgereinigten Abwässern dient.

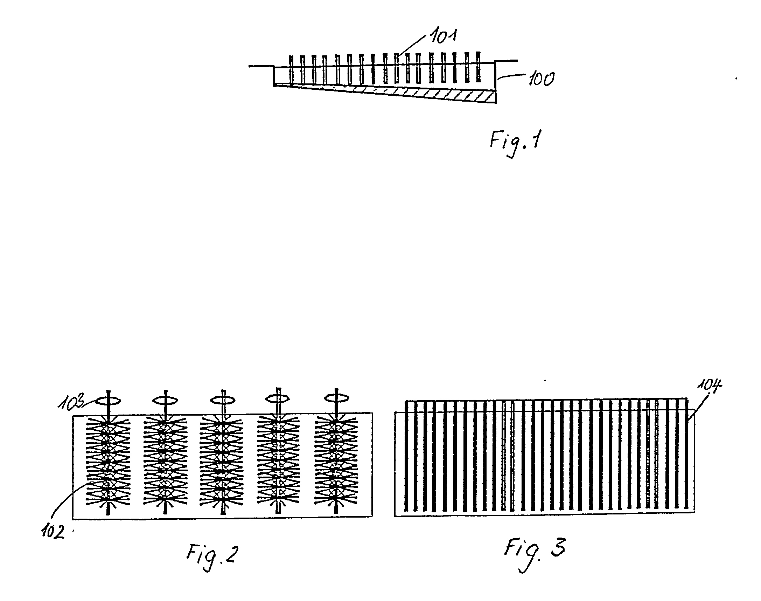

In Fig. 1 ist ein Klärbecken 100, das beispielsweise ein Regenklärbecken sein kann, im Schnitt dargestellt, in das von der einen Seite her, in der Figur von links, Abwasser eingeleitet wird, wobei das Abwasser Stoffe wie Trübstoffe, Schwermetalle, Kalzium, Kieselsäure, Phosphor und Stickstoff enthalten kann. In das Klärbecken 100 sind Einbauteile 101 eingesetzt, die mit einer dünnen Schicht einer Biomasse oder einem Biofilm versehen sind. Durch die Einbauteile 101 verändern sich insbesondere bei Anströmung die Strömungsverhältnisse, so daß Zonen mit erhöhten und abgesenkten Turbulenzen entstehen, wodurch die Sedimentation der in den Abwässern enthaltenen sedimentierbaren Stoffe begünstigt wird. An den Phasengrenzflächen zwischen Wasser und Einbauteilen, d.h. an dem Biofilm der Einbauteile, setzen sich Stoffe ab, die den Aufwuchs von Organismen bewirken, wodurch ein Zuwachs des Biofilms auftritt. Dabei sind die Arten der Aufwuchsorganismen je nach den Verhältnissen in den Klärbecken unterschiedlich, wobei Temperaturen, Strömungsgeschwindigkeit, Beleuchtung und selbstverständlich auch in den Abwässern enthaltene Stoffe eine Rolle spielen. In geeigneter Frequenz wird der Biofilmzuwachs abgestreift, so daß er in seinem Wachstum effizient gehalten werden kann. Beim Abstreifen ist selbstverständlich darauf zu achten, daß Biofilm auf den Einbauteilen verbleibt. Der abgestreifte Biofilmzuwachs wird entweder auf den Boden des Beckens 100 abgesenkt, wo er sich mit den sedimentierten Stoffen vermischt und den Schlamm bildet, oder er wird getrennt ausgetragen und als Dünger oder dergleichen weiterverwendet.

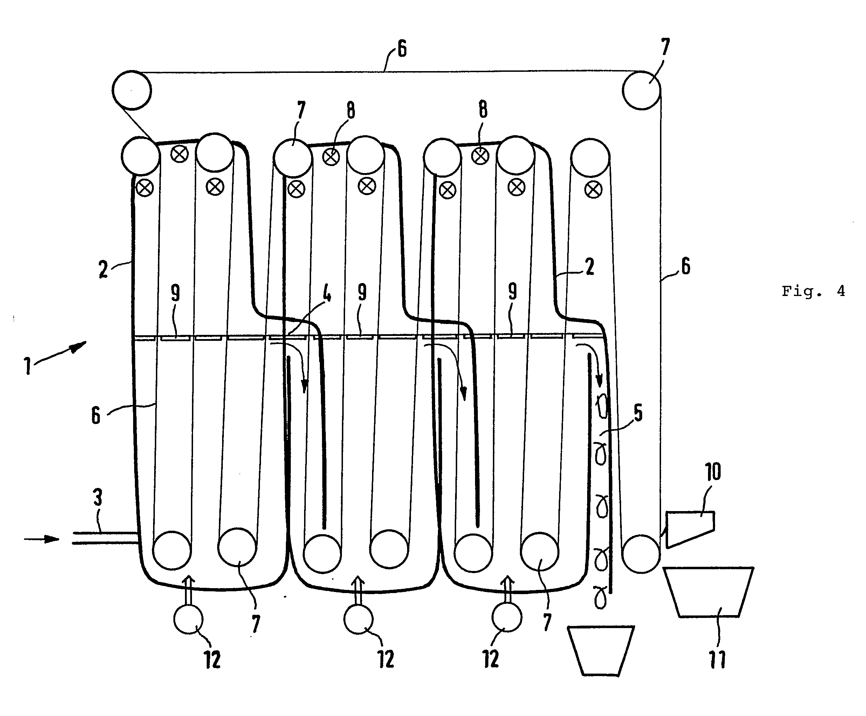

Fig. 2 und Fig. 3 zeigen unterschiedliche Ausführungsbeispiele der Einbauteile, wobei in Fig. 2 Bürsten 102 verwendet werden, die eine große besiedelbare Fläche zur Verfügung stellen. Den Bürsten 102 sind jeweils Abstreifringe 103 zugeordnet, wobei Bürsten 102 und Abstreifringe 103 relativ zueinander bewegbar sind. Beispielsweise können die Abstreifringe 103 feststehen und die Bürsten 102 werden angehoben oder die Abstreifringe 103 werden bewegt. Die Frequenz des Abstreifens ist abhängig von der Aufwuchsmasse und an diese angepaßt.

In Fig. 3 sind die Einbauteile als Stäbe ausgebildet, wobei diese Stäbe unterschiedliche Profile haben können. Die zugeordneten Abstreifer oder Abschaber können in ihrer Form an die Stäbe 104 angepaßt sein, wobei wie in dem Ausführungsbeispiel nach Fig. 2 entweder die Stäbe 104 oder die Abstreifer bzw. Abschaber bewegt werden. Selbstverständlich sind auch andere Einbauteile denkbar, nämlich netz- oder gitterförmige Elemente oder auch Bänder.

Die sedimentierte Substanz und der abgestreifte Biozuwachs wird beispielsweise durch eine externe Absaug- oder Abpumpvorrichtung halbkontinuierlich entfernt.

Die Einbauteile 101, 102, 104 werden zu koppelbaren Einbaumodulen zusammengefaßt, wobei jedes Modul mit mehreren Einbauteilen, die entsprechend den Fig. 2 und 3 als Bürsten oder als Stäbe unterschiedlicher Profile ausgebildet sind und entsprechende Abstreifvorrichtungen haben, bestückt. Die einzelnen Module werden in vorhandene Becken eingesetzt und miteinander gekoppelt, wobei sie individuell gewartet oder ausgetauscht werden können. Die Module sind in normierter Größe hergestellt und können beispielsweise zur einfacheren Transportierbarkeit an handelsübliche Containergrößen angepaßt sein. Jedes Modul weist neben den Einbauteilen und den Abstreifvorrichtungen eine Absetzpfanne und einen Anschluß zur Absaugung der sedimentierten Schlammengen auf und kann mit einem zentralen Schlammbehälter verbunden werden.

Die Sedimentation und auch der Aufwuchs werden durch die Strömung bzw. durch eine Wasserbewegung begünstigt. Damit auch bei stillstehendem Wasserkörper in dem Klärbecken eine Sedimentation und ein ausreichender Aufwuchs auftritt, wird das Wasser durch eine Pumpe umgewälzt. Eine Bewegung des Wassers kann auch dadurch hervorgerufen werden, daß die Einbauteile derart ausgebildet sind, daß sie sich in ihrer Wärmekapazität stark vom Wasser unterscheiden. Beispielsweise können die Einbauteile lichtabsorbierend, d.h. schwarz gestaltet sein, so daß sie sich aufheizen und somit eine Konvektion bewirken.

Fig. 4 zeigt ein weiteres Ausführungsbeispiel der vorliegenden Erfindung, die vorzugsweise für organisch vorgereinigte Abwässer verwendbar ist, aus denen Phosphor und Stickstoff entfernt werden soll. Dabei sind die Einbauteile als Endlosband ausgebildet. Insgesamt bildet die Vorrichtung einen Bandreaktor 1, der mehrere Tanks 2 aufweist, die miteinander verbunden oder gekoppelt sind, wodurch der Bandreaktor 1 ebenfalls einen modularen Aufbau erhält. Im unteren Bereich des ersten Tanks 2 ist eine Zuleitung 3 für das organisch vorgereinigte Abwasser vorgesehen, wobei so viel Abwasser zugeführt wird, daß die Tanks 2 bis zu einer bestimmten Höhe gefüllt sind und über Überläufe 4 ein Überströmen von einem Tank 2 in den anderen Tank möglich ist. Der letzte Tank 2 weist eine Ableitung 5 für das von Stickstoff und Phosphor gereinigte Abwasser auf.

Durch die Tanks 2 ist ein Endlosband 6 geführt, das über Rollen 7 mehrfach umgelenkt wird und eine endlose Schleife bildet. Das Endlosband 6 ist, bevor es in das Abwasser des ersten Tanks 2 eintaucht, mit einer dünnen Schicht aus Algen bewachsen. Durch die Umlenkrollen 7 taucht jeder Teil des Endlosbandes bei seinem Transport mehrfach in das in den Tanks 2 enthaltene Abwasser ein und aus diesem wieder heraus, wobei durch die wechselnde Behandlung mit der Möglichkeit der Nährstoffaufnahme und anschließender Verarbeitung ein starker Aufwuchs der vor Beginn der Behandlung auf dem Band vorhandenen Algen ermöglicht wird.

Zur Förderung des Wachstums sind zwischen dem Band 6 Beleuchtungsvorrichtungen 8 vorgesehen, wobei vorzugsweise eine für das Wachstum von Algen optimale spektrale Verteilung der Strahlung der Beleuchtungsvorrichtungen 8 gewählt wird. Für eine Bestrahlung der Algen auf dem Endlosband 6 ist auch Sonnenlicht sehr geeignet, wobei dann allerdings der nicht in das Abwaser eintauchende Teil des Bandes 6 freiliegen muß. Damit in dem das Abwasser aufnehmenden Teil der Tanks 2 keine unerwünschte Veralgung auftritt, wird dieser Teil durch Blenden 9 oder eine entsprechende Abdeckung gegen Lichteinfall abgedeckt.

An dem Endlosband 6 ist nach seinem vollständigen Durchlauf durch die unterschiedlichen Tanks 2 eine Abschabvorrichtung 10 vorgesehen, die die auf dem Band aufgewachsenen Algen über die gesamte Breite des Endlosbandes abschabt, wobei die abgeschabte Biomasse in einem Behälter 11 gesammelt wird. Dabei werden die Algen von dem Endlosband 6 in der Weise entfernt, daß eine kleine Schicht auf dem Band 6 verbleibt, die den Aufwuchs bei dem nächsten Durchlauf durch die Tanks 2 auslösen soll. Die in dem Behälter 11 gewonnene Biomasse wird getrocknet und beispielsweise als Dünger in der Landwirtschaft verwandt.

Um den Aufwuchs der Algen weiterhin steuern zu können, wird in dem Abwasser ein zusätzlicher interner Kreislauf ausgelöst, d.h. die Wasserbewegung wird zusätzlich zu der normalen Durchströmung des Abwassers erhöht. Dies geschieht beispielsweise über Umwälzpumpen 12, die das Abwasser in vorgegebenem Takt umwälzen. Durch diese Maßnahme wird gewährleistet, daß in dem bewachsenen Band keine Limitierungszonen auftreten, d.h., daß die Nährstoffe gleichmäßig zugeführt werden. Das bewachsene Band weist nämlich eine Oberfläche auf, in der Algen und Bakterien vergesellschaftet sind, während in den unter der Oberfläche liegenden Schichten die Versorgung mit Nährstoffen geringer würde, weil sie diffundieren müssen. Wenn aber zusätzlich umgewälzt wird, erfolgt eine gleichmäßigere Versorgung über die gesamte Dicke der bewachsenen Schichten des Bandes.

In der obigen Beschreibung wurde darauf Bezug genommen, daß der Aufwuchs sowohl abhängig von den Lichtverhältnissen als auch von der Strömungsgeschwindigkeit des Abwassers in den Tanks 2 gesteuert werden kann. Zusätzlich spielt die Temperatur eine Rolle, so daß der Aufwuchs der Algen abhängig von den Lichtverhältnissen, den Strömungsgeschwindigkeiten und der Temperatur optimiert werden kann, wobei außerdem eine Anpassung der Geschwindigkeit des Endlosbandes vorgenommen werden kann.

Das von Stickstoff und Phosphor gereinigte Abwasser wird über die Ableitung 5 abgezogen. In der Zeichnung sind nur drei Module dargestellt, die hintereinandergeschaltet sind, falls gewünscht oder zur Erhöhung des Reinigungsgrades notwendig können aber mehrere Tanks 2 zusammengeschaltet werden.

## Ansprüche

1. Verfahren zum Abscheiden von Schmutz- und Schadstoffen aus Abwässern, die in Becken oder Behälter eingeleitet werden,
**dadurch gekennzeichnet,**

daß in die Becken oder Behälter Einbauelemente eingesetzt werden, die mit einem Biofilm versehen werden und daß in zeitlichen Abständen jeweils der Biofilmzuwachs mechanisch derart entfernt wird, daß ein Rest auf den Einbauelementen verbleibt.

2. Verfahren nach Anspruch 1, dadurch gekennzeichnet, daß der Biofilmzuwachs abgestreift oder abgeschabt wird.

3. Verfahren nach Anspruch 1 oder 2, dadurch gekennzeichnet, daß das Abwasser im Becken oder Behälter mechanisch umgewälzt wird.

4. Verfahren nach Anspruch 1 oder 2, dadurch gekennzeichnet, daß das Abwasser im Becken oder Behälter durch Konvektion bewegt wird.

5. Vorrichtung zum Abscheiden von Schmutz- und Schadstoffen aus Abwässern, die in Becken oder Behälter eingeleitet werden, dadurch gekennzeichnet, daß in den Becken (100) oder Behältern (1) mit einem Biofilm versehene Einbauelemente (101,102,104,6) angeordnet sind und daß eine Einrichtung (103,10) zum Entfernen des Biofilmzuwachses den Einbauelementen zugeordnet ist, die den Biofilmzuwachs derart entfernt, daß ein Rest auf den Einbauelementen verbleibt.

6. Vorrichtung nach Anspruch 5, dadurch gekennzeichnet, daß die Einbauelemente als Bürsten (102), Bänder (6), Netze, Gitter oder Stäbe (104) unterschiedlicher Profile und die Einrichtung zum Entfernen des Biofilmzuwachses als Abstreif- oder Abschabvorrichtung (103,10) ausgebildet sind.

7. Vorrichtung nach Anspruch 5 oder 6, dadurch gekennzeichnet, daß die Einbauelemente in koppelbaren Einbaumodulen zusammengefaßt sind, die jeweils mit Abstreif- oder Abschabvorrichtungen versehen sind, wobei die Einbaumodule als individuelle Einheiten in die Behälter oder Becken einsetzbar und austauschbar sind.

8. Vorrichtung nach Anspruch 7, dadurch gekennzeichnet, daß jedem Modul eine Absetzpfanne zum Sammeln des entfernten Biofilmzuwachses und der sedimentierten Stoffe zugeordnet ist.

9. Vorrichtung nach einem der Ansprüche 5 bis 8, dadurch gekennzeichnet, daß die Dichte und/oder Struktur der Einbauelement in Fließrichtung der Abwässer veränderbar sind.

10. Vorrichtung nach einem der Ansprüche 5 bis 9, dadurch gekennzeichnet, daß in dem Becken oder Behälter eine Umwälzvorrichtung zum Umwälzen des Abwassers vorgesehen ist.

11. Vorrichtung nach einem der Ansprüche 5 bis 9, dadurch gekennzeichnet, daß die Einbauelemente derart ausgebildet sind, daß sie sich in ihrer Wärmekapazität stark von der des Abwassers unterscheiden.

12. Vorrichtung nach Anspruch 5, 6 oder 10, insbesondere zum Entfernen von Phosphor und Stickstoff aus organisch vorgereinigten Abwässern, dadurch gekennzeichnet, daß die Einbauelemente als ein mit Algen bewachsenes Endlosband (6) ausgebildet sind, das durch mindestens einen das Abwasser aufnehmenden Tank geführt ist, wobei der Tank eine Zuleitung für das Abwasser und eine Ableitung für das von Phosphor und Stickstoff gereinigte Abwasser aufweist.

13. Vorrichtung nach Anspruch 12, dadurch gekennzeichnet, daß das Endlosband (6) über Umlenkvorrichtungen geführt ist, die derart angeordnet sind, daß das Endlosband (6) in das den Tank (2) zumindest teilweise füllende Abwasser mehrfach eintaucht.

14. Vorrichtung nach Anspruch 12 oder 13, dadurch gekennzeichnet, daß mehrere Tanks (2) vorgesehen sind, die modulartig miteinander gekoppelt sind, wobei das Endlosband durch alle Tanks (2) geführt ist und das Abwasser über Überläufe (4) von einem Tank (2) in den anderen strömt.

15. Vorrichtung nach einem der Ansprüche 12 bis 14, dadurch gekennzeichnet, daß der mindestens eine Tank (2) eine Abdeckung (9) aufweist, die das Abwasser in dem Tank (2) gegen Lichteinfall abdeckt.

16. Vorrichtung nach einem der Ansprüche 7 bis 11, dadurch gekennzeichnet, daß eine Beleuchtungsvorrichtung (8) vorgesehen ist, die das Band (6) außerhalb des Abwassers beleuchtet.

17. Vorrichtung nach einem der Ansprüche 12 bis 16, dadurch gekennzeichnet, daß die Strömungsgeschwindigkeit und/oder die Temperatur und/oder die Beleuchtung und/oder die Geschwindigkeit des Endlosbandes (6) an die Wachstumsgeschwindigkeit der Algen angepaßt sind.

Fig.1

Fig.2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A- 109 313 (STÄDTEHYGIENE- UND WASSERBAUGESELLSCHAFT) <br> * Die ganze Patentschrift * <br> --- | 1,5,6,8 ,9 | C 02 F 3/06 <br> C 02 F 3/32 <br> B 01 D 21/00 |
| Y | US-A-4 190 543 (J.M. PEDERSON et al.) <br> * Spalte 1, Zeilen 48-66; Spalte 51, Zeile 51 - Spalte 3, Zeile 49; Spalte 3, Zeile 62 - Spalte 4, Zeile 7; Spalte 5, Zeilen 9-19 * <br> --- | 1,5,6,8 ,9 | |
| Y | DE-A-2 235 470 (MASCHINENFABRIK HELLMUT GEIGER) <br> * Seite 11, Ansprüche 1,3-13 * <br> --- | 1,5,6,8 ,9 | |
| A | FR-A- 789 765 (SOCIETE EAU ET ASSAINISSEMENT) <br> * Seite 3, Zusammenfassung; Figur 1 * <br> --- | 1 | |
| A | US-A-3 565 797 (P.J. GRESHAM) <br> * Spalte 6, Zeile 12; Spalte 7, Zeile 18; Spalte 3, Zeilen 48-54 * <br> --- | 1,5,12, 13,15- 17 | |
| A | US-A-4 465 600 (J.C. DODD) <br> * Spalte 1, Zeile 48 - Spalte 2, Zeile 20; Spalte 2, Zeilen 35-57 * <br> --- | 12,13 | **RECHERCHIERTE SACHGEBIETE (Int. Cl.5)** <br><br> C 02 F <br> B 01 D |
| A | FR-A- 344 174 (L.E. VIAL) <br> * Seite 2, Zusammenfassung Punkt 1; Figur 2 * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 03-04-1990 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)